# EUROPEAN PATENT SPECIFICATION

(11) **EP 3 825 936 B1**
(45) Date of publication and mention of the grant of the patent: **01.01.2025**
(21) Application number: 20208475.2
(22) Date of filing: 18.11.2020
(51) Int. Cl.: G06Q 10/0875, G06Q 10/087, G06Q 10/0631

(54) **SYSTEMS AND METHODS FOR SELECTING COMPONENTS FOR AN ENGINE**
SYSTEME UND VERFAHREN ZUR AUSWAHL VON KOMPONENTEN FÜR EINEN MOTOR
SYSTÈMES ET PROCÉDÉS DE SÉLECTION DE COMPOSANTS POUR UN MOTEUR

(30) Priority: 22.11.2019 US 201916692735
(43) Date of publication of application: 26.05.2021
(73) Proprietor: General Electric Company, Evendale, OH 45215 (US)
(72) Inventor: FREELY, Brendan Michael, Schenectady, New York 12345 (US); OSGOOD, Daniel, Schenectady, New York 12345 (US); MALETTA, Paul, Schenectady, New York 12345 (US); KLASING, Kevin Samuel, Schenectady, New York 12345 (US); RUGGIERO, Eric John, Schenectady, New York 12345 (US)
(74) Representative: Openshaw & Co.

(56) References cited:
- US-A1- 2011 098 835
- US-A1- 2019 163 169
- US-B2- 7 043 324

## Description

### TECHNICAL FIELD

The present specification generally relates to systems and methods for selecting components for an engine based on operating environment characteristics and manufacturing data.

### BACKGROUND

Engines are assembled according to a specification. The specification for an engine generally includes a range of tolerances (e.g., relating to sizes, performance values, and the like) which are acceptable for the particular engine model. A specification may be further detailed into a bill of materials ("BOM"), which identifies components for assembly, for example, by serial number, quantity, and the like. Document US2011/098835 relates to a method and system for automatically configuring an optimal geometry for a custom product. Document US2019/163169 relates to methods and systems for modelling a bill of material for a configurable product. Document US7043324 relates to a method for improving quality of manufactured assemblies.

### SUMMARY

In a first aspect A1, a system for selecting components for an engine includes an electronic control unit including a processor and a memory component and a machine-readable instruction set stored in the memory component of the electronic control unit. The machine-readable instruction set causes the system to perform at least the following when executed by the processor: receive a catalog of a plurality of components, where the plurality of components include a measured manufacturing characteristic, receive at least one operating environment characteristic of a plurality of operating environment characteristics, and select one or more components from the catalog of the plurality of components for a bill of materials based on the measured manufacturing characteristic and the at least one operating environment characteristic.

A second aspect A2 includes the system of A1 wherein the measured manufacturing characteristic belongs to a predefined grouping of components within a distribution of variability for a predefined component type, and the grouping corresponds to at least one of the operating environment characteristics of the plurality of operating environment characteristics.

A third aspect A3 includes the system of any of the first-second aspects A1-A2, wherein the machine-readable instruction set further causes the system to determine a group for a component within one of a predefined plurality of groupings of components based on the measured manufacturing characteristic.

A fourth aspect A4 includes the system of the third aspect A3, wherein the predefined plurality of groupings of components define a distribution of variability for a specific component type.

A fifth aspect A5 includes the system of any of the third-fourth aspects A3-A4, wherein the determination of the group for the component is further based on at least one of: a cumulative damage model, a fleet model, or inspection data of the engine.

A sixth aspect A6 includes the system of any of the first-fifth aspects A1-A5, wherein the selected one or more components improve a performance asset of the engine.

A seventh aspect A7 includes the system of any of the first-sixth aspects A1-A6, wherein the selected one or more components improve a life cycle of the one or more components within the engine.

An eighth aspect A8 includes the system of any of the first-seventh aspects A1-A7, wherein the selected one or more components improve a service interval of the engine.

A ninth aspect A9 includes the system of any of the first-eighth aspects A1-A8, wherein the plurality of operating environment characteristics includes at least one of: a length of flight, a region take-off or landing temperature, an approach or landing trajectory, a take-off trajectory, a landing braking protocol, a take-off acceleration profile, or a particulate density or size in the air.

In an tenth aspect A10 a computer implemented method includes receiving, by an electronic control unit of a system, a catalog of a plurality of components, where the plurality of components include a measured manufacturing characteristic, receiving, by the electronic control unit, at least one operating environment characteristic from a plurality of operating environment characteristics, and selecting, by the electronic control unit, one or more components from the catalog of the plurality of components for a bill of materials based on the measured manufacturing characteristic and the at least one operating environment characteristic.

An eleventh aspect A11 includes the computer implemented method of the tenth aspect A10, wherein the measured manufacturing characteristic belongs to a predefined grouping of components within a distribution of variability for a predefined component type, and the grouping corresponds to at least one of the operating environment characteristics of the plurality of operating environment characteristics.

A twelfth aspect A12 includes the computer implemented method of any of the tenth-eleventh A10-A11, wherein the method further comprises determining, by the electronic control unit, a group for a component within one of a predefined plurality of groupings of components based on the measured manufacturing characteristic, wherein the predefined plurality of groupings of components define a distribution of variability for a specific component type.

A thirteenth aspect A13 includes the computer implemented method of the twelfth aspect A12, wherein the determination of the group for the component is further based on at least one of: a cumulative damage model, a fleet model, or inspection data of the engine.

A fourteenth aspect A14 includes the computer implemented method of any of the tenth-thirteenth aspect A10-A13, wherein the plurality of operating environment characteristics includes at least one of a length of flight, a region take-off or landing temperature, an approach or landing trajectory, a take-off trajectory, a landing braking protocol, a take-off acceleration profile, or a particulate density or size in the air.

In a fifteenth aspect A15, a computer program product for selecting components for an engine includes a computer readable storage medium having programing instructions embodied therewith. The programing instructions are executable by a processor to cause the processor to: receive a catalog of a plurality of components, where the plurality of components include a measured manufacturing characteristic, receive at least one operating environment characteristic from a plurality of operating environment characteristics, and select one or more components from the catalog of the plurality of components for a bill of materials based on the measured manufacturing characteristic and the at least one operating environment characteristic.

A sixteenth aspect A 16 includes a computer program product of the fifteenth aspect A15, wherein the measured manufacturing characteristic belongs to a predefined grouping of components within a distribution of variability for a predefined component type, and the grouping corresponds to at least one of the operating environment characteristics of the plurality of operating environment characteristics.

A seventeenth aspect A17 includes a computer program product of any of the fifteenth-sixteenth aspect A15-A16, wherein the programing instructions are further executable to cause the processor to determine group for a component within one of a predefined plurality of groupings of components based on the measured manufacturing characteristic, wherein the predefined plurality of groupings of components define a distribution of variability for a specific component type.

An eighteenth aspect A18 includes a computer program product of the seventeenth aspect A17, wherein the determination of the group for the component is further based on at least one of: a cumulative damage model, a fleet model, or inspection data of the engine.

A nineteenth aspect A19 includes a computer program product of any of the fifteenth-eighteenth aspect A15-A18, wherein the selected one or more components improve at least one of a performance assets, a life cycle of the selected one or more components, or a service interval of the engine.

A twentieth aspect A20 includes a computer program product of any of the fifteenth-nineteenth aspect A15-A19, wherein the plurality of operating environment characteristics includes at least one of a length of flight, a region take-off or landing temperature, an approach or landing trajectory, a take-off trajectory, a landing braking protocol, a take-off acceleration profile, or a particulate density or size in the air.

These and additional features provided by the embodiments described herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 depicts an exemplary computer network, illustrating components for a system that selects components for an engine based on operating environment characteristics and manufacturing data, according to one or more embodiments shown and described herein;
FIG. 2 depicts internal components of the electronic control unit for selecting components for an engine, according to one or more embodiments shown and described herein;
FIG. 3 illustrates a flow diagram of an example, non-limiting computer implemented method for selecting components for an engine, according to one or more embodiments shown and described herein;
FIG. 4 illustrates a flow diagram of another example, non-limiting computer-implemented method for selecting components for an engine, according to one or more embodiments shown and described herein;
FIG. 5 illustrates an example, non-limiting cross-section of an aviation engine, according to one or more embodiments shown and described herein;
FIG. 6 illustrates of an example, non-limiting schematic of an automobile engine, according to one or more embodiments shown and described herein; and
FIG. 7 illustrates an example, non-limiting chart depicting a distribution curve of a characteristic of a component, according to one or more embodiments shown and described herein.

### DETAILED DESCRIPTION

It has been discovered that by selecting one or more components for assembly into an engine from a particular group of a distribution of acceptable components a particular engine model may be improved. For example, an engine may be improved such that maintenance is more predictable, a performance asset is improved, a life cycle of the engine is improved, and/or a service interval or on wing time is improved. The weakest thermal performer in a set of part (e.g., blades, nozzles, shrouds, liner segments, or the like) generally limits commercial engines. Embodiments of the present disclosure relate to systems and methods for selecting components for an engine based on operating environment characteristics and manufacturing data. Embodiments described herein will be described with reference to aviation engines. However, it should be understood that the systems and methods described herein are also applicable to marine engines, automobile engines, locomotive engines, stationary engines, or the like.

One or more of the embodiments described herein implement one or more algorithms that may be performed by an electronic control unit that collects, analyzes, and utilizes operating environment characteristics to determine how an engine can be improved for a particular operating environment. As used herein, "improved" may refer to but is not limited by achieving a target operating value for an engine or a performance level of at least one engine characteristic that is optimized or almost optimized for the engine operating in an environment. As used herein, "operating environment characteristics" may be used interchangeable with and/or refer to route structure characteristics, take-off and/or landing characteristics, operating locations, and/or the like. The operating environment characteristics may include characteristics such as a length of flight, duration of operation, interval and/or intensity of operation during each duration of operation, environment temperature profiles (e.g., average, minimum, and/or maximum temperatures at ground elevation, cruising altitude, or the like), acceleration profiles, which may include one or more acceleration intervals and/or jerks (i.e., rate of change of acceleration"), deceleration profiles (e.g., engine braking or reverse thrust operation; which may include one or more acceleration intervals, and/or jerks), approach and/or landing trajectories, particulate characteristics (e.g., particulate densities and/or particulate sizes), and/or the like.

The electronic control unit may determine and generate a classification for a group of operating environment characteristics. For example, a classification may be determined and/or generated for a region or route that is harsher than normal. That is, a harsher than normal region or route may include an operating environment where takeoff and landing temperatures are higher than normal, where high particulate densities or sizes are present, and/or the like which may affect the performance, life cycle, or service interval of an engine. In some embodiments, a classification may be determined and/or generated for a route that includes or requires higher than normal performance functionality and assets of an engine. For example, a flight route, which includes short runways, thus requiring more intense acceleration profiles and/or deceleration profiles, may be defined as a first classification. A second classification may be defined by routes having approach and/or landing trajectories that result in greater than normal stresses on the engine. These are only a few illustrative examples. It is understood that combinations of operating environment characteristics based on data collected from actual route analytics, cumulative damage modeling, fleet modeling, inspection data of an engine and/or the like may be utilized to define a classification.

The electronic control unit may utilize a classification to determine and select one or more components having one or more measured manufacturing characteristics that results in an engine and the components thereof where the performance, life cycle, service interval, and/or the like is improved. As used herein, the term "components" and "parts" may be used interchangeably to mean components or parts of an engine. Bill of materials may be used to identify components that are assembled into engines to fulfill production orders. The bill of materials may also be used to identify components for maintenance, repair, and/or overhaul (MRO) of an engine. Embodiments described herein may configure a bill of materials by selecting one or more components from a catalog of a plurality of components based on measured manufacturing characteristics. Measured manufacturing characteristics may include, but are not limited to, thermal barrier coating thickness, blade airflow (e.g., airflow), metal thickness, wall thickness, and/or the like.

These measured manufacturing characteristics can affect the thermal performance of the blades or the thermal life expectancy of the blades. Therefore, the thermal performance of the blades can be measured relative to the mean life or lifespan (i.e., life cycle) of the blades. The mean life of the blades can be quantified in terms of number of cycles (e.g., takeoff and landing) that a blade has before it reaches end use. For example, the blades with a robust thermal performance has on average a number of cycles more than the average blades.

The thermal barrier coating can insulate the blades from thermal fatigue thereby extending the mean life of the blades. For example, a blade with a thicker thermal barrier coating has better insulation from thermal fatigue than does a blade with a thinner thermal barrier coating. Additionally, many turbine blades are hollow airfoil that can channel airflow for internal cooling. Internal cooling can be attained by injecting a coolant inside the blades. Airflow measurements can be performed by measuring the mass rate of airflow. Airflow measurements can be performed to verify that the mass rate of airflow is within minimum and maximum limits for total blade airflow. If the minimum amount of coolant is not present, the blades can have a shorter mean life than intended. Similarly, the wall thickness of the blades can also be a determinant of mean life. The wall thickness of a blade can vary between blades during production.

Within a set of conforming blades, some blades can be more robust than others in terms of thermal performance while others may be more capable of delivering on performance assets such as fuel efficiency. As used herein, a "performance asset" of an engine may include but is not limited to fuel efficiency, fuel consumption, emissions, power, torque, operating temperature, thrust, and/or the like. For example, one blade can be flown a number of cycles while another blade can be flown a greater number of cycles. The blades can be evaluated based on thermal performance and selected for a particular engine's bill of materials based on a grouping within a standard deviation. The blades that have a similar thermal performance can be selected for a particular engine's bill of materials together so that they degrade at the same time. This selection algorithm (e.g., implemented by selection logic referred to herein) can be used to reduce downtime and/or provide for a more predictable maintenance. For example, if the blades degrade at different times, the engine would need to be taken apart to repair one blade, then another, then another and so on. In order to avoid grouping sets of blades that are too similar and cause unforeseen downstream effects, the selection algorithm can also introduce variation into the sets of blades. For example, a bill of materials for an engine can trade a component or blade with another bill of materials that is one standard deviation away about 68% of the time and two standard deviations away about 28% of the time.

Optimizing the performance, life cycle, and/or service interval of an engine to have a known distribution of performance can affect the Weibull distribution or probability distribution of the engine life cycle or performance. Instead of the component set or set of blades demanding removal because of an outlier, the proposed concept tailors the Weibull distribution to a known distribution of component performance, component life cycle, and/or component maintenance schedule where the components will degrade or perform more similarly as a set. The Weibull distributions for a gas turbine hot section parts such as high-pressure turbine stage 1 blades (HPT S1Bs) are dictated by the weakest performer in the set. For example, if 61 of the 62 HPT SIBs are performing well but one has poor thermal performance, it will drive the engine off wing earlier than expected. However, embodiments described herein enable more predictive maintenance of the engine and optimization of fleet-wide performance for a particular set of operating environment characteristics.

Simulations can be employed using the cumulative damage model (CDM) to approximate the fleet impact of grouping components. In some embodiments, simulations can employ fleet models and/or inspection data of engines to approximate the impact of grouping components for a particular classification that defines one or more operating environment characteristics. A CDM can determine the condition driving distress and the number of exposures to that condition that led to accelerated distress. For example, exposures to dusty environments (e.g., high particulate densities) resulting in dust collecting on a part in turn can lead that part to become hotter in operation. An analysis can predict the number of remaining exposures the part can withstand before it should be serviced or scheduled for maintenance. Engines that are assembled with components selected utilizing the systems and methods of intelligent selection of components described herein should require service or maintenance at about the same time using the CDM simulation, fleet modeling, and/or inspection data modeling.

The detailed description disclosed herein is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

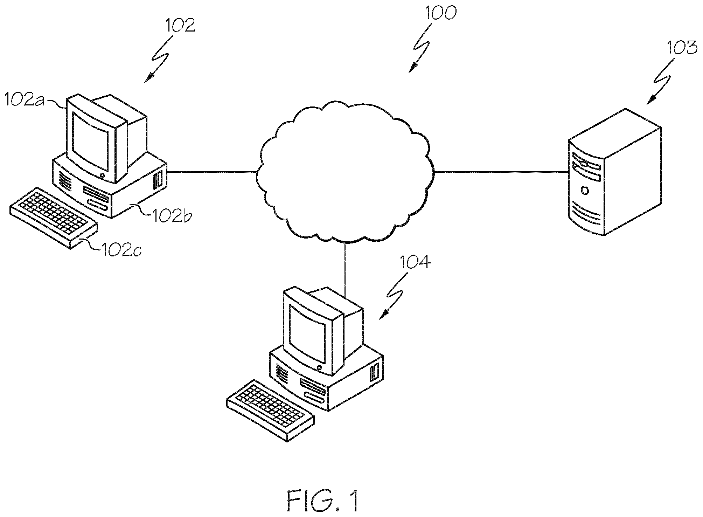

Referring now to the drawings, FIG. 1 depicts an exemplary computer network 100, illustrating components for a system that selects components for an engine based on operating environment characteristics and manufacturing data, according to one or more embodiments shown and described herein. As illustrated in FIG. 1, a network 100 may include a wide area network, such as the internet, a local area network (LAN), a mobile communications network, a public service telephone network (PSTN) and/or other network and may be configured to electronically and/or communicatively connect a computing device 102, an electronic control unit 103 for selecting components for an engine based on operating environment characteristics and manufacturing data, and an administrator computing device 104.

The computer processing systems, computer-implemented methods, apparatus and/or computer program products described herein can employ hardware and/or software to generate models that are highly technical in nature, that are not abstract and that cannot be performed as a set of mental acts by a human. For example, the one or more embodiments can perform the lengthy and complex interpretation and analysis on a copious amount of data including operating environment characteristics and measured manufacturing characteristics to generate engine configurations that improve performance assets, life cycle, and/or a service interval or on wing time. In another example, the one or more embodiments can perform predictive analytics on a large amount of data to facilitate generating one or more models of the subset of components to automatically generate a bill of materials for assembly or maintenance, repair, or overall of an engine.

The computing device 102 may include a display 102a, a processing unit 102b and an input device 102c, each of which may be communicatively coupled together and/or to the network 100. The computing device 102 may be used to interface with a front-end application, which may utilize the system and method for selecting components for an engine. In some embodiments, one or more computing devices may be implemented to collect and/or transmit operating environment characteristics and/or measured manufacturing characteristics for components by carrying out one or more specific steps described herein. In some embodiments, the computing device 102 may represent a source of operating environment characteristics such as route characteristics for an airline. Additionally, included in FIG. 1 is the administrator computing device 104. In the event that the electronic control unit 103 for selecting components for an engine requires oversight, updating, or correction, the administrator computing device 104 may be configured to provide the desired oversight, updating, and/or correction.

It should be understood that while the computing device 102 and the administrator computing device 104 are depicted as personal computers and the electronic control unit 103 for selecting components for an engine is depicted as a single server, these are merely examples. More specifically, in some embodiments, any type of computing device (e.g., mobile computing device, personal computer, server, and the like) may be utilized for any of these components. Additionally, while each of these computing devices is illustrated in FIG. 1 as a single piece of hardware, this is also an example. More specifically, the computing device 102, the electronic control unit 103 for selecting components for an engine, and administrator computing device 104 may represent a plurality of computers, servers, databases, and the like. For example, the computing device 102, the electronic control unit 103 for selecting components for an engine, and administrator computing device 104 may form a distributed or grid-computing framework for implementing the methods described herein.

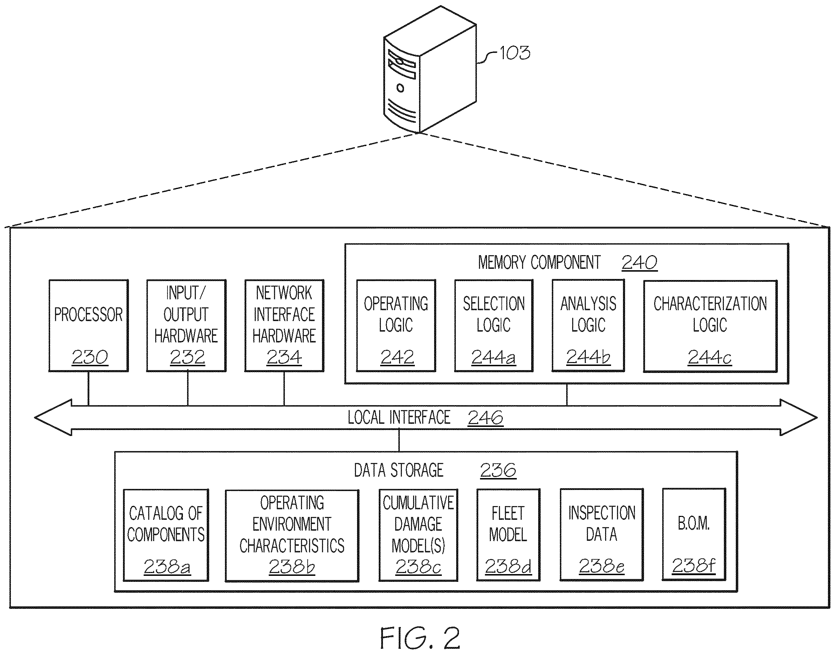

FIG. 2 depicts internal components of the electronic control unit 103 for selecting components for an engine. The electronic control unit 103 generally receives a catalog of components including measured manufacturing characteristics and at least one operating environment characteristic, and selects one or more components where the selection improves an engine. To complete such tasks, the electronic control unit 103 may utilize hardware, software, and/or firmware, according to embodiments shown and described herein. While in some embodiments, the electronic control unit 103 may be configured as a general-purpose computer with the requisite hardware, software, and/or firmware, in some embodiments, the electronic control unit 103 may be configured as a special purpose computer designed specifically for performing the functionality described herein.

As also illustrated in FIG. 2, the electronic control unit 103 may include a processor 230, input/output hardware 232, network interface hardware 234, a data storage component 236, a memory component 240, and a local interface 246 that communicatively couples the components of the electronic control unit 103 and/or the system for selecting components for an engine.

The processor 230 may include any processing component(s) configured to receive and execute programming instructions (e.g., instructions stored in the data storage component 236 and/or the memory component 240). The instructions may be in the form of a machine-readable instruction set stored in the data storage component 236 and/or the memory component 240 (e.g., one or more programming instructions). The input/output hardware 232 may include a monitor, keyboard, mouse, printer, camera, microphone, speaker, and/or other device for receiving, sending, and/or presenting data. The network interface hardware 234 may include any wired or wireless networking hardware, such as a modem, LAN port, Wi-Fi card, WiMAX card, mobile communications hardware, and/or other hardware for communicating with other networks and/or devices.

It should be understood that the data storage component 236 may reside local to and/or remote from the electronic control unit 103 and may be configured to store one or more pieces of data for access by the electronic control unit 103 and/or other components. The data storage component 236, may include, but is not limited to, data defining a catalog of components 238a, operating environment characteristics 238b, cumulative damage model(s) 238c, fleet models 238d, inspection data 23 8e, and/or bill of materials 238f. The catalog of components 238a defines a plurality of components identified by unique serial numbers that are in compliance with manufacturing specifications. The components of the catalog of components 238a further include measured manufacturing characteristics, which may be utilized when the electronic control unit 103 determines which of a set of like parts may be selected for assembly into an engine such that performance, life cycle, service intervals and/or on wing time are improved. The operating environment characteristics 238b, as described herein, may be data collected from customers, airlines, and/or modeled parameters, which may be utilized by the logic of the system to select components for an engine to improve the engine. The cumulative damage model(s) 238c, fleet models 238d, and inspection data 238e may utilize engine parameters, performance results, and actual operation details and/or maintenance histories for engines. As described herein, the system analyzes engine performance and maintenance data, through simulations implementing CDMs, fleet models 238d or the like to identify more precise component specifications which can improve an engine for operation in a given operating environment characteristic or more general classifications (e.g., defined by one or more operating environment characteristics 238b). The bill of materials 238f may include a set of serial numbers, quantities, and the like defining the components for assembly or replacement in an engine.

The memory component 240 may be machine-readable memory (which may also be referred to as a non-transitory processor readable memory). The memory component 240 may be configured as volatile and/or nonvolatile memory and, as such, may include random access memory (including SRAM, DRAM, and/or other types of random access memory), flash memory, registers, compact discs (CD), digital versatile discs (DVD), and/or other types of storage components. Additionally, the memory component 240 may be configured to store operating logic 242, selection logic 244a, analysis logic 244b, and/or characterization logic 244c, each of which may be embodied as collective or individual computer programs, firmware, or hardware, as an example, and will be described in more detail herein. In some embodiments, the computer programs may be stored on a computer program product medium. Furthermore, the local interface 246, also included in FIG. 2, may be implemented as a bus or other interface to facilitate communication among the components of the electronic control unit 103.

Included in the memory component 240 is the operating logic 242, selection logic 244a, analysis logic 244b, and/or characterization logic 244c. The operating logic 242 may include an operating system and/or other software for managing components of the electronic control unit 103. The selection logic 244a, when executed, can select (e.g., group, kit, organize, etc.) the components for aviation engines based on the classification of the one or more operating environment characteristics 238b by the characterization logic 244c from the measured manufacturing characteristics. For example, the components or blades can be grouped together based on measured manufacturing characteristics relevant to their thermal life expectancy (e.g., thermal performance). For example, selecting a particular group of blades having a predetermined coating thickness or other measured manufacturing characteristic can help avoid having one weak blade that fails before the others. Aviation engines can be driven off wing and placed in downtime repair by a minimally thermal protected blade. The remaining blades that still have life are then forced to be driven off wing, removed or scrapped, and extra cycles are wasted. For example, one blade can have a number of cycles while another blade can have a greater number of cycles. Randomly selecting blades can ensure that the blades do not fail at similar times; however, optimizing performance, life cycle, and/or a service internal may suffer when components are randomly selected from a distribution of acceptable components. That is, by selecting components within a particular grouping of a distribution for a characteristic that results in an improved engine where performance is improved, engine and/or component life cycle is improved, and/or a more predictable service interval when also accounting for one or more operating environment characteristics 238b.

Intelligent selection of components with similar and/or small variance can save time spent on maintenance so that the engine does not have to be taken apart because one weak blade needs to be repaired. Intelligent selection of components based on one or more operating environment characteristics 238b results in improved fleet durability performance, reduced shop visits and reduced premature scrapping of components.

The analysis logic 244b, when executed, can analyze one or more operating environment characteristics 238b to determine a combination of components that will result in an improved engine for the particular set of operating environment characteristics 238b. For example, an engine operating in a hotter than normal environment may be improved for performance if components with better air flow characteristics are installed. By way of another example, engines that operate where the operating environment characteristics 23 8b such as route characteristics demand higher performance (e.g., have intense acceleration or deceleration profiles), then components which fall into a distribution having a greater than average metal thickness may be optimal for such engines to increase performance assets and reduce the number of maintenance intervals for the engine. The analysis logic 244b may be configured to determine component attributes and trade-offs between the operating environment characteristics 23 8b and the measured manufacturing characteristics to deliver an improved engine. In some embodiments, simulations may be implemented to perform or support operations of the analysis logic 244b.

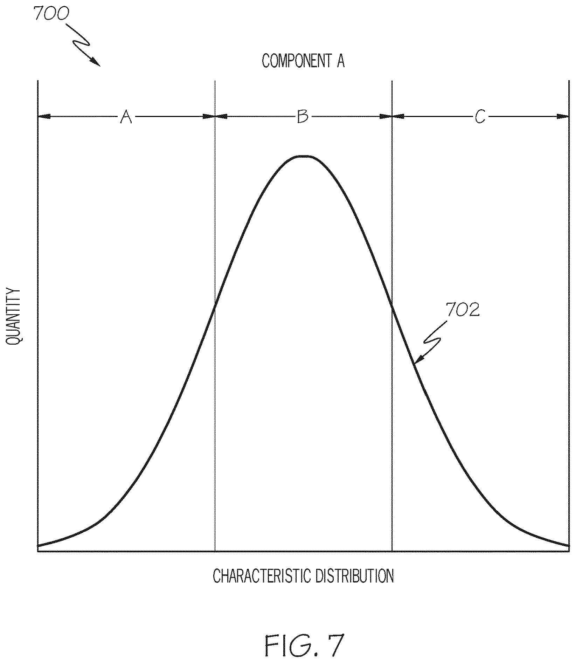

The characterization logic 244c, when executed, can receive measured manufacturing characteristics and determine groupings of components within a distribution that may be selected to meet the requirements for improved engine operation based on the one or more operating environment characteristics 238b. For example, as shown in FIG. 7, a chart 700 of a distribution curve 702 for an illustrative component is depicted. Within the distribution curve 702, three groupings (i.e., a first group A, a second group B, and a third group C) are depicted. This is merely an example, there may be more or less groupings defined within a distribution curve 702 of a characteristic for a manufactured component. The characterization logic 244c may operate to define the groupings within a characteristic distribution.

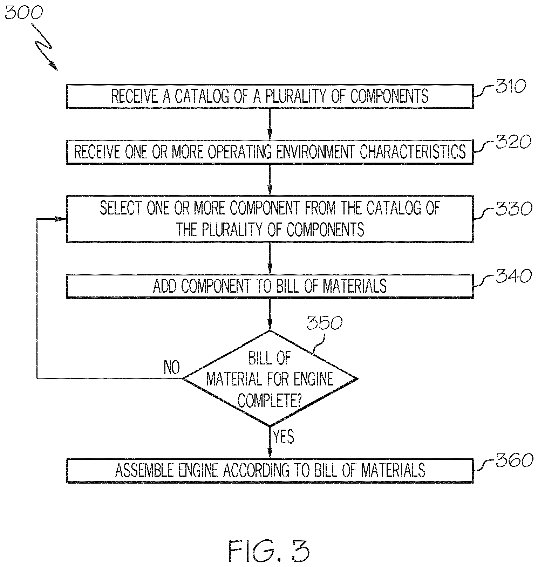

Referring now to FIG. 3, FIG. 3 illustrates a flow diagram of an example, non-limiting computer implemented method 300 for selecting components for an engine in accordance with the one or more embodiments described herein. Repetitive description of like elements employed in other embodiments described herein may be omitted for sake of brevity. At block 310, the computer-implemented method 300 may include receiving (e.g., via the input/output hardware 232 of the electronic control unit 103) a catalog of a plurality of components. The catalog of a plurality of components may include measured manufacturing characteristics for one or more of the components. The measured manufacturing characteristics can include, but is not limited to, the thermal barrier coating thickness, blade airflow and wall thickness. These manufacturing characteristics can be received from a computing device 102, an administrator computing device 104, or another source. The measured manufacturing characteristics may be generated and/or input into the system by a third-party manufacturing facility, an inspection department, a repair facility, and/or the like.

At block 320, the computer-implemented method 300 may include receiving (e.g., via the input/output hardware 232 of the electronic control unit 103) one or more operating environment characteristics 238b. The one or more operating characteristics may be received from a computing device 102, an administrator computing device 104, or another source. The one or more operating environment characteristics 238b may be generated and/or input into the system by a third party such as a customer from historical route data, a design team, a simulation, and/or the like.

At block 330, the computer-implemented method 300 may include selecting one or more components form the catalog of the plurality of components for a bill of materials 238f. The selection, for example implementing selection logic 244a as described herein, is based on the measured manufacturing characteristics and at least one operating environment characteristic. The selection is configured to select components which improve an engine for operation based on the at least one operating environment characteristic.

At block 340, the computer-implemented method 300 may include adding the one or more components to a bill of materials 238f. At block 350, the computer-implemented method 300 may include determining whether the bill of materials 238f for the engine is complete. When the bill of materials 238f is complete, for example, once each component for an engine to be assembled or repaired is identified by its serial number, then at block 360, the computer-implemented method 300 may store the bill of materials 238f in the data storage component 236. In some embodiments, the computer-implemented method 300 may transmit the bill of materials 238f to the assembly system or team and/or the repair shop or system. The engine is then repaired or assembled according to the bill of materials 238f. When the bill of materials 238f is determined to be incomplete (no at block 350), the computer-implemented method 300 may cause the system to return to block 330 or another block and continue selecting components for the bill of materials 238f.

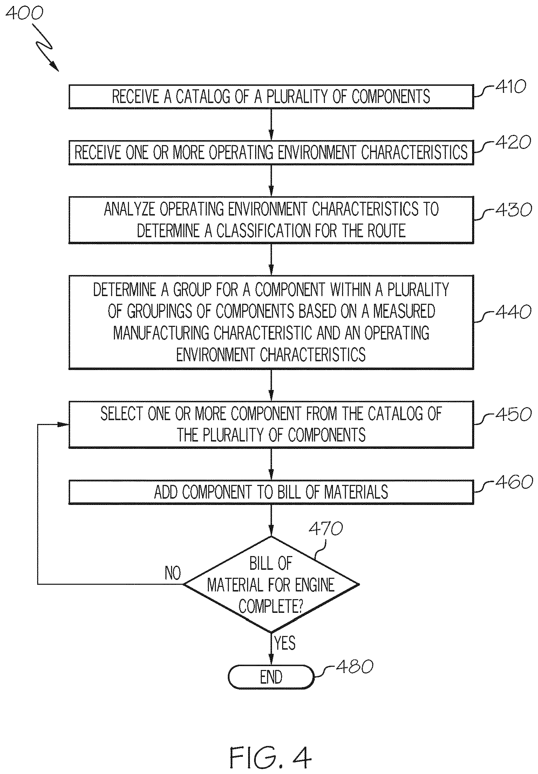

Referring now to FIG. 4, FIG. 4 illustrates a flow diagram of another example, non-limiting computer-implemented method 400 for selecting components for an engine in accordance with the one or more embodiments described herein. At block 410, the computer-implemented method 400 may include receiving (e.g., via the input/output hardware 232 of the electronic control unit 103) a catalog of a plurality of components. At block 420, the computer-implemented method 400 may include receiving (e.g., via the input/output hardware 232 of the electronic control unit 103) one or more operating environment characteristics 238b. At block 430, the computer-implemented method 400 may include analyzing the one or more operating environment characteristics 238b to determine a classification for the route. The system may execute the analysis logic 244b described herein to generate a category or classification that defines a combination of one or more operating environment characteristics 238b. For example, a set of operating environment characteristics 238b may include high acceleration and deceleration profiles for takeoff and landing as well as higher than normal average ground temperatures for a region and/or a route flown by an airline. As such, it may be advantageous to configure an engine model to include components similarly grouped within a distribution of components that include above average heat management so that the components life cycles are more similarly matched. This may improve the maintenance and/or service scheduling for an engine thus optimizing on wing time.

At block 440, the computer-implemented method 400 may include determining a group for a component within a plurality of groupings of components based on one or more measured manufacturing characteristics and/or one or more operating environment characteristics 238b. That is, the system at block 440 may execute the characterization logic 244c as described herein. The characterization logic 244c may operate to define the groupings within a characteristic distribution.

At block 450, the computer-implemented method 400 may include selecting one or more components from the catalog of the plurality of components for a bill of materials 238f, which is similar to the functionality depicted by block 330 with reference to the computer-implemented method 300 in FIG. 3. Additionally, at block 460, the computer-implemented method 400 may include adding the one or more components to a bill of materials 238f, which is similar to the functionality depicted by block 340 with reference to the computer-implemented method 300 in FIG. 3.

At block 470, the computer-implemented method 400 may include determining whether the bill of materials 238f for the engine is complete. When the bill of materials 238f is complete, for example, once each component for an engine to be assembled or repaired is identified by its serial number, then at block 480, the computer-implemented method 400 may end (or conclude an iteration of the method) with the storage of the bill of materials 238f in the data storage component 236. In some embodiments, at block 480, the computer-implemented method 400 may end (or conclude an iteration of the method) with the transmission of the bill of materials 238f to the assembly system or team and/or the repair shop or system. The engine is then repair or assembled according to the bill of materials 238f. When the bill of materials 238f is determined to be incomplete (NO at block 470), the computer-implemented method 400 may cause the system to return to block 450 or another block and continue selecting components for the bill of materials 238f.

It should now be understood that engines assembled or maintained utilizing the systems and methods described herein allow for better prediction of engine service, and optimization of engine placement based on sophisticated inspection and models (i.e., placement within regions or environment where performance of the engine, life cycle of the components, and/or maintenance schedules for the engine is improved).

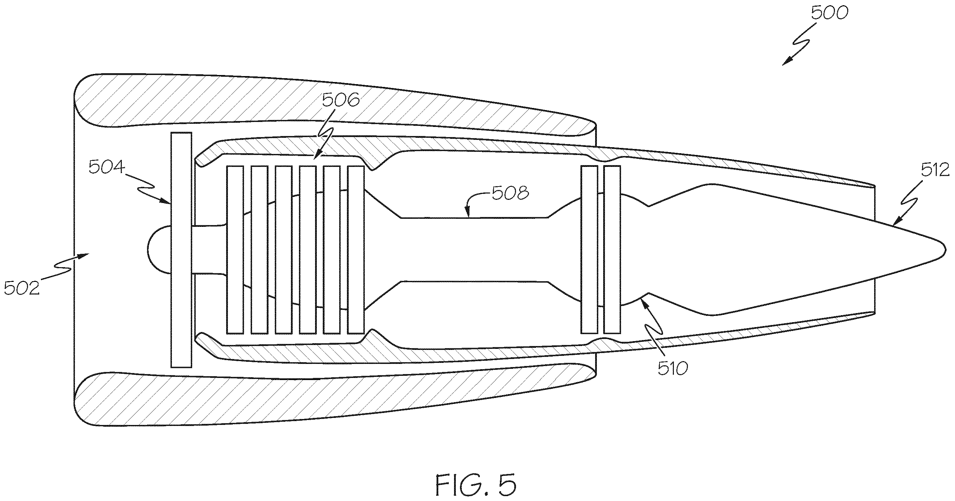

Turning now to FIG. 5, an illustration of an example, non-limiting cross-section of an aviation engine 500 in accordance with one or more embodiments described herein is depicted. Repetitive description of like elements employed in other embodiments described herein is omitted for sake of brevity. The aviation engine 500 includes an inlet 502, a fan 504, a compressor 506, a combustor 508, a turbine 510 and a nozzle 512. The inlet 502 can continuously draw air into the aviation engine 500 through the inlet 502 and ensure smooth airflow into the aviation engine 500. The fan 504 and the compressor 506 are made up of rotating blades and stationary vanes. The pressure and temperature of the air increases as it moves through the compressor 506. The combustor 508 can continuously add fuel to compressed air and burn it. The turbine 510 is a series of bladed discs that can extract energy from the hot gases leaving the combustor 508. Some of this energy can also be used to drive the compressor 506. Cooling air or coolant from the compressor 506 can be used to cool the turbine blades of the turbine 510. The exhaust gases from the turbine 510 pass through the nozzle 512 to produce a high velocity jet.

The HPT SIBs of the turbine 510 are in the hot section of the aviation engine 500 where thermal fatigue can degrade the blades. The temperature of the turbine 510 can reach over 2,000°F (1,093°C). This is may be especially true for aviation engines 500 that operate in higher than average temperatures, for example. As a result, the engines generally may require more frequent maintenance. However, by assembling and/or maintaining an aviation engine 500 utilizing the systems and methods described herein the components of such an engine may be improved to handle higher than average operating temperatures and thus improve the frequency of maintenance and/or the components life cycle. By selecting components for an engine based on the one or more operating environment characteristics 238b, one or more performance assets, a life cycle and/or service intervals of the engine may be improved.

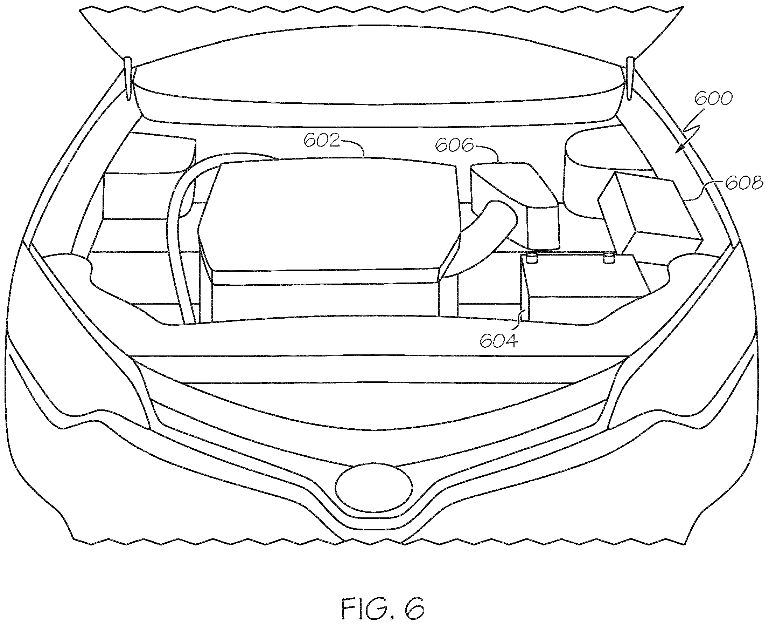

Similarly, the systems and methods described herein with respect to an aviation engine 500 may also be applied to the assembly and maintenance of an automobile engine 600. FIG. 6 illustrates of an example, non-limiting schematic of an automobile engine 600 in accordance with one or more embodiments described herein is depicted. That is, by selecting components used with the automobile engine 600 based on one or more operating environment characteristics 238b, an automobile engine 600 may be improved. An automobile engine 600 includes a gas combustion engine 602 (or electric motors), a battery 604, an exhaust system 606, and an air intake 608. The air intake 608 draws in air into the gas combustion engine 602 where fuel is mixed with the air and ignited to cause combustion. The burned fuel produces exhaust that is expelled through an exhaust system 606. In some embodiments, the air drawn in through the air intake 608 may be compressed to generate a turbo boost within the automobile engine 600. These and other components of an automobile engine 600 may be configured through the systems and methods described herein to improve a performance asset, life cycle of a component or the automobile engine 600, or a maintenance cycle based on one or more operating environment characteristics 238b. For example, one or more operating environment characteristics 238b may indicate that an automobile is more commonly used for continuous operation on highways versus stop and go driving. As such, components, oils, or other fluids may be selected for use and operation within an automobile engine 600 to improve performance, life cycles, and/or maintenance intervals.

Referring now to FIG. 7, an illustration of an example, non-limiting chart 700 depicting a distribution curve 702 with three groupings (i.e., a first group A, a second group B, and a third group C) are depicted. Components manufactured to a specification may include some variation within an acceptable range. For purposes of this disclosure, the distribution of the variation may be characterized and groups may be formed. The groups may correspond to a set of components having similar variations corresponding to a measured manufacturing characteristic. As discussed above with reference to the characterization logic 244c, characterization logic 244c may be implemented by an electronic control unit 103 to generate one or more groups of components. The one or more groups of components may correspond to one or more operating environment characteristics 238b. As discussed herein, by selecting components for engine that correspond to operating environment characteristics 238b experienced by an engine, a performance asset, life cycle, and/or service may be improved.

For example, the distribution curve 702 includes three groupings (i.e., a first group A, a second group B, and a third group C). By way of a non-limiting example, the distribution curve 702 may represent the variation in a coating thickness of a component after manufacturing. The first group A may include those components with a thin coating thickness but a coating thickness within an acceptable manufacturing tolerance. The second group B may include those components with a coating thickness that is closest to the target coating thickness and the third group C may include those components that include a coating thickness that is thicker but within the acceptable manufacturing tolerance. A component with a coating thickness that is thicker than the target manufacturing thickness may be advantageous to use in an engine that operates in an environment having a higher than normal particulate density and/or size in the air. That is, a component such as a blade may take more wear with a thicker coating before needing to be replaced or serviced, thereby optimizing a service interval (e.g., on wing time) for the engine.

It should now be understood that engines assembled or maintained utilizing the systems and methods described herein provide for better prediction of engine service, optimization of engine placement based on analysis of one or more operating environment characteristics through inspection and modeling. As such, engines manufactured with a select set of components may be allocated to regions of operation where they are improved (i.e., performance of the engine, life cycle of the components, and/or maintenance schedules for the engine is improved).

Moreover, it is understood that systems and methods describe herein relate to selecting components for an aviation engine based on operating environment characteristics and measured manufacturing characteristics. Systems may include an electronic control unit having a processor and a memory component and a machine-readable instruction set stored in the memory component of the electronic control unit. The machine-readable instruction set, when executed by the electronic control unit, may cause the system to receive a catalog of a plurality of components, where the plurality of components include a measured manufacturing characteristic, receive at least one operating environment characteristic of a plurality of operating environment characteristics, and select one or more components from the catalog of the plurality of components for a bill of materials based on the measured manufacturing characteristic and the at least one operating environment characteristic, where the selection of the one or more components improves the aviation engine.

It is noted that the term "about" may be utilized herein to represent the inherent degree of uncertainty that may be attributed to any quantitative comparison, value, measurement, or other representation. This and other terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made. Moreover, although various aspects of the claimed subject matter have been described herein, such aspects need not be utilized in combination. It is therefore intended that the appended claims cover all such changes and modifications.

## Claims

1. A system for selecting engine components for an engine comprising:
an electronic control unit (103) comprising a processor (230) and a memory component (240);
a machine-readable instruction set stored in the memory component (240) of the electronic control unit (103) that causes the system to perform at least the following when executed by the processor (230):
receive a catalog of a plurality of engine components, wherein the plurality of engine components includes a measured manufacturing characteristic;
receive at least one operating environment characteristic of a plurality of operating environment characteristics;
analyze, through a simulation, an impact of a grouping of engine components from the plurality of engine components, each having a measured manufacturing characteristic defining an engine based on the at least one operating environment characteristic;
determine component attributes based on the impact of the at least one operating environment characteristic on the grouping of engine components defining the engine; and
select one or more engine components from the catalog of the plurality of engine components for a bill of materials based on the measured manufacturing characteristic and the at least one operating environment characteristic.

2. The system according to claim 1, wherein the measured manufacturing characteristic belongs to a predefined grouping of components within a distribution of variability for a predefined component type, and the grouping corresponds to at least one of the operating environment characteristics of the plurality of operating environment characteristics.

3. The system according to any one of claims 1-2, wherein the machine-readable instruction set further causes the system to:
determine a group for a component within one of a predefined plurality of groupings of components based on the measured manufacturing characteristic.

4. The system according to claim 3, wherein the predefined plurality of groupings of components define a distribution of variability for a specific component type.

5. The system according to claim 3 or 4, wherein the determination of the group for the component is further based on at least one of: a cumulative damage model, a fleet model, or inspection data of the engine.

6. The system according to any one of claims 1-5, wherein the selected one or more engine components improve a performance asset of the engine.

7. The system according to any one of claims 1-6, wherein the selected one or more engine components improve a life cycle of the one or more components within the engine.

8. The system according to any one of claims 1-7, wherein the selected one or more engine components improve a service interval of the engine.

9. The system according to any one of claims 1-8, wherein the plurality of operating environment characteristics includes at least one of:
a length of flight,
a region take-off or landing temperature,
an approach or landing trajectory,
a take-off trajectory,
a landing braking protocol,
a take-off acceleration profile, or
a particulate density or size in the air.

10. A computer implemented method, comprising:
receiving, by an electronic control unit of a system, a catalog of a plurality of engine components, wherein the plurality of engine components includes a measured manufacturing characteristic;
receiving, by the electronic control unit, at least one operating environment characteristic from a plurality of operating environment characteristics;
analyzing, through a simulation, an impact of a grouping of engine components from the plurality of engine components, each having a measured manufacturing characteristic, defining an engine based on the at least one operating environment characteristic;
determining component attributes based on the impact of the at least one operating environment characteristic on the grouping of engine components defining the engine; and
selecting, by the electronic control unit, one or more engine components from the catalog of the plurality of engine components for a bill of materials based on the measured manufacturing characteristic and the at least one operating environment characteristic.

11. The computer implemented method according to claim 10, wherein the measured manufacturing characteristic belongs to a predefined grouping of components within a distribution of variability for a predefined component type, and the grouping corresponds to at least one of the operating environment characteristics of the plurality of operating environment characteristics.

12. The computer implemented method according to any one of claims 10-11, further comprising:
determining, by the electronic control unit, a group for a component within one of a predefined plurality of groupings of components based on the measured manufacturing characteristic, wherein the predefined plurality of groupings of components define a distribution of variability for a specific component type.

13. The computer implemented method according to claim 12, wherein the determination of the group for the component is further based on at least one of: a cumulative damage model, a fleet model, or inspection data of the engine.

14. The computer implemented method according to any one of claims 10-13, wherein the plurality of operating environment characteristics includes at least one of:
a length of flight,
a region take-off or landing temperature,
an approach or landing trajectory,
a take-off trajectory,
a landing braking protocol,
a take-off acceleration profile, or
a particulate density or size in the air.

15. A computer program product for selecting engine components for an engine, the computer program product comprising a computer readable storage medium having programing instructions embodied therewith, the programing instructions are executable by a processor to cause the processor to:
receive a catalog of a plurality of engine components, wherein the plurality of engine components includes a measured manufacturing characteristic;
receive at least one operating environment characteristic from a plurality of operating environment characteristics;
analyze, through a simulation, an impact of a grouping of engine components defining an engine based on the at least one operating environment characteristic;
determine component attributes based on the impact of the at least one operating environment characteristic on the grouping of engine components defining the engine; and
select one or more engine components from the catalog of the plurality of engine components for a bill of materials based on the measured manufacturing characteristic and the at least one operating environment characteristic.

## Patentansprüche

1. System zum Auswählen von Antriebsmaschinenkomponenten für eine Antriebsmaschine, umfassend:
eine elektronische Steuereinheit (103), umfassend einen Prozessor (230) und eine Speicherkomponente (240);
einen maschinenlesbaren Befehlssatz, der in der Speicherkomponente (240) der elektronischen Steuereinheit (103) gespeichert ist und der bewirkt, dass das System mindestens das Folgende bei Ausführung durch den Prozessor (230) durchführt:
Empfangen eines Katalogs einer Vielzahl von Antriebsmaschinenkomponenten, wobei die Vielzahl von Antriebsmaschinenkomponenten eine gemessene Herstellungseigenschaft einschließt;
Empfangen von mindestens einer Betriebsumgebungseigenschaft aus einer Vielzahl von Betriebsumgebungseigenschaften;
Analysieren, durch eine Simulation, einer Auswirkung einer Gruppierung von Antriebsmaschinenkomponenten aus der Vielzahl von Antriebsmaschinenkomponenten, von denen jede eine gemessene Herstellungseigenschaft aufweist, die eine Antriebsmaschine basierend auf der mindestens einen Betriebsumgebungseigenschaft definiert;
Bestimmen von Komponentenattributen basierend auf der Auswirkung der mindestens einen Betriebsumgebungseigenschaft auf die Gruppierung von Antriebsmaschinenkomponenten, die die Antriebsmaschine definieren; und
Auswählen einer oder mehrerer Antriebsmaschinenkomponenten aus dem Katalog der Vielzahl von Antriebsmaschinenkomponenten für eine Stückliste basierend auf der gemessenen Herstellungseigenschaft und der mindestens einen Betriebsumgebungseigenschaft.

2. System nach Anspruch 1, wobei die gemessene Herstellungseigenschaft zu einer vordefinierten Gruppierung von Komponenten innerhalb einer Variabilitätsverteilung für einen vordefinierten Komponententyp gehört und die Gruppierung mindestens einer der Betriebsumgebungseigenschaften der Vielzahl von Betriebsumgebungseigenschaften entspricht.

3. System nach einem der Ansprüche 1 bis 2, wobei der maschinenlesbare Befehlssatz das System ferner veranlasst zum:
Bestimmen einer Gruppe für eine Komponente innerhalb einer vordefinierten Vielzahl von Gruppierungen von Komponenten basierend auf der gemessenen Herstellungseigenschaft.

4. System nach Anspruch 3, wobei die vordefinierte Vielzahl von Gruppierungen von Komponenten eine Variabilitätsverteilung für einen spezifischen Komponententyp definiert.

5. System nach Anspruch 3 oder 4, wobei die Bestimmung der Gruppe für die Komponente ferner auf mindestens einem basiert von: einem kumulativen Schadensmodell, einem Flottenmodell oder Inspektionsdaten der Antriebsmaschine.

6. System nach einem der Ansprüche 1 bis 5, wobei die ausgewählte eine oder mehrere Antriebsmaschinenkomponenten eine Leistungsstärke der Antriebsmaschine verbessert.

7. System nach einem der Ansprüche 1 bis 6, wobei die ausgewählte eine oder mehrere Antriebsmaschinenkomponenten eine Lebensdauer der einen oder mehreren Komponenten innerhalb der Antriebsmaschine verbessern.

8. System nach einem der Ansprüche 1 bis 7, wobei die ausgewählte eine oder mehrere Antriebsmaschinenkomponenten das Wartungsintervall der Antriebsmaschine verkürzen.

9. System nach einem der Ansprüche 1 bis 8, wobei die Vielzahl von Betriebsumgebungseigenschaften mindestens eines einschließt von:
einer Fluglänge,
einer Start- oder Landetemperatur in der Region,
einer Anflug- oder Landebahn,
einer Startbahn,
einem Landebremsprotokoll,
einem Startbeschleunigungsprofil oder
einer Partikeldichte oder -größe in der Luft.

10. Computerimplementiertes Verfahren, umfassend:
Empfangen, durch eine elektronische Steuereinheit eines Systems, eines Katalogs einer Vielzahl von Antriebsmaschinenkomponenten, wobei die Vielzahl von Antriebsmaschinenkomponenten eine gemessene Herstellungseigenschaft umfasst;
Empfangen, durch die elektronische Steuereinheit, von mindestens einer Betriebsumgebungseigenschaft aus einer Vielzahl von Betriebsumgebungseigenschaften;
Analysieren, durch eine Simulation, einer Auswirkung einer Gruppierung von Antriebsmaschinenkomponenten aus der Vielzahl von Antriebsmaschinenkomponenten, von denen jede eine gemessene Herstellungseigenschaft aufweist, die eine Antriebsmaschine basierend auf der mindestens einen Betriebsumgebungseigenschaft definiert;
Bestimmen von Komponentenattributen basierend auf der Auswirkung der mindestens einen Betriebsumgebungseigenschaft auf die Gruppierung von Antriebsmaschinenkomponenten, die die Antriebsmaschine definieren; und
Auswählen, durch die elektronische Steuereinheit, einer oder mehrerer Antriebsmaschinenkomponenten aus dem Katalog der Vielzahl von Antriebsmaschinenkomponenten für eine Stückliste basierend auf der gemessenen Herstellungseigenschaft und der mindestens einen Betriebsumgebungseigenschaft.

11. Computerimplementiertes Verfahren nach Anspruch 10, wobei die gemessene Herstellungseigenschaft zu einer vordefinierten Gruppierung von Komponenten innerhalb einer Variabilitätsverteilung für einen vordefinierten Komponententyp gehört und die Gruppierung mindestens einer der Betriebsumgebungseigenschaften der Vielzahl von Betriebsumgebungseigenschaften entspricht.

12. Computerimplementiertes Verfahren nach einem der Ansprüche 10 bis 11, ferner umfassend:
Bestimmen, durch die elektronische Steuereinheit, einer Gruppe für eine Komponente innerhalb einer von einer vordefinierten Vielzahl von Gruppierung von Komponenten basierend auf der gemessenen Herstellungseigenschaft, wobei die vordefinierte Vielzahl von Gruppierung von Komponenten eine Variabilitätsverteilung für einen spezifischen Komponententyp definiert.

13. Computerimplementiertes Verfahren nach Anspruch 12, wobei die Bestimmung der Gruppe für die Komponente ferner auf mindestens einem basiert von: einem kumulativen Schadensmodell, einem Flottenmodell oder Inspektionsdaten des Motors.

14. Computerimplementiertes Verfahren nach einem der Ansprüche 10 bis 13, wobei die Vielzahl der Betriebsumgebungseigenschaften mindestens eines einschließt von:
einer Fluglänge,
einer Start- oder Landetemperatur in der Region,
einer Anflug- oder Landebahn,
einer Startbahn,
einem Landebremsprotokoll,
einem Startbeschleunigungsprofil oder
einer Partikeldichte oder -größe in der Luft.

15. Computerprogrammprodukt zum Auswählen von Antriebsmaschinenkomponenten für eine Antriebsmaschine, das Computerprogrammprodukt umfassend ein computerlesbares Speichermedium, das darin verkörperten Programmierungsanweisungen aufweist, wobei die Programmierungsanweisungen durch einen Prozessor ausführbar sind, um den Prozessor zu veranlassen zum:
Empfangen eines Katalogs einer Vielzahl von
Antriebsmaschinenkomponenten, wobei die Vielzahl von Antriebsmaschinenkomponenten eine gemessene Herstellungseigenschaft einschließt;
Empfangen von mindestens einer Betriebsumgebungseigenschaft aus einer Vielzahl von Betriebsumgebungseigenschaften;
Analysieren, durch eine Simulation, einer Auswirkung einer Gruppierung von Antriebsmaschinenkomponenten, die einen Antriebsmaschine definieren, basierend auf mindestens einer Betriebsumgebungseigenschaft;
Bestimmen von Komponentenattributen basierend auf der Auswirkung der mindestens einen Betriebsumgebungseigenschaft auf die Gruppierung von Antriebsmaschinenkomponenten, die die Antriebsmaschine definieren; und
Auswählen einer oder mehrerer Antriebsmaschinenkomponenten aus dem Katalog der Vielzahl von Antriebsmaschinenkomponenten für eine Stückliste basierend auf der gemessenen Herstellungseigenschaft und der mindestens einen Betriebsumgebungseigenschaft.

## Revendications

1. Système permettant de sélectionner des composants de moteur pour un moteur comprenant :
une unité de commande électronique (103) comprenant un processeur (230) et un composant de mémoire (240) ;
un ensemble d'instructions lisibles par machine stocké dans le composant de mémoire (240) de l'unité de commande électronique (103) qui amène le système à mettre en oeuvre au moins ce qui suit lorsqu'il est exécuté par le processeur (230) :
recevoir un catalogue d'une pluralité de composants de moteur, dans lequel la pluralité de composants de moteur comporte une caractéristique de fabrication mesurée ;
recevoir au moins une caractéristique d'environnement d'exploitation d'une pluralité de caractéristiques d'environnement d'exploitation ;
analyser, par le biais d'une simulation, un impact d'un regroupement de composants de moteur parmi la pluralité de composants de moteur, ayant chacun une caractéristique de fabrication mesurée définissant un moteur en fonction de l'au moins une caractéristique d'environnement d'exploitation ;
déterminer des attributs de composant en fonction de l'impact de l'au moins une caractéristique d'environnement d'exploitation sur le regroupement de composants de moteur définissant le moteur ; et
sélectionner un ou plusieurs composants de moteur parmi le catalogue de la pluralité de composants de moteur pour une nomenclature en fonction de la caractéristique de fabrication mesurée et de l'au moins une caractéristique d'environnement d'exploitation.

2. Système selon la revendication 1, dans lequel la caractéristique de fabrication mesurée appartient à un regroupement prédéfini de composants au sein d'une distribution de variabilité pour un type de composant prédéfini, et le regroupement correspond à au moins l'une des caractéristiques d'environnement d'exploitation de la pluralité de caractéristiques d'environnement d'exploitation.

3. Système selon l'une quelconque des revendications 1 à 2, dans lequel l'ensemble d'instructions lisibles par machine amène en outre le système à :
déterminer un groupe pour un composant au sein de l'un parmi une pluralité prédéfinie de regroupements de composants en fonction de la caractéristique de fabrication mesurée.

4. Système selon la revendication 3, dans lequel la pluralité prédéfinie de regroupements de composants définissent une distribution de variabilité pour un type de composant spécifique.

5. Système selon la revendication 3 ou 4, dans lequel la détermination du groupe pour le composant est en fonction en outre d'au moins l'un parmi : un modèle de dommages cumulés, un modèle de flotte ou des données d'inspection du moteur.

6. Système selon l'une quelconque des revendications 1 à 5, dans lequel le ou les composants de moteur sélectionnés améliorent un atout de performance du moteur.

7. Système selon l'une quelconque des revendications 1 à 6, dans lequel le ou les composants de moteur sélectionnés améliorent un cycle de vie du ou des composants à l'intérieur du moteur.

8. Système selon l'une quelconque des revendications 1 à 7, dans lequel le ou les composants de moteur sélectionnés améliorent un intervalle d'entretien du moteur.

9. Système selon l'une quelconque des revendications 1 à 8, dans lequel la pluralité de caractéristiques d'environnement d'exploitation comporte au moins l'un parmi :
une durée de vol,
une température de région de décollage ou d'atterrissage,
une trajectoire d'approche ou d'atterrissage,
une trajectoire de décollage,
un protocole de freinage d'atterrissage,
un profil d'accélération de décollage, ou
une densité ou taille de particules dans l'air.

10. Procédé implémenté par ordinateur, comprenant :
la réception, par une unité de commande électronique d'un système, d'un catalogue d'une pluralité de composants de moteur, dans lequel la pluralité de composants de moteur comporte une caractéristique de fabrication mesurée ;
la réception, par l'unité de commande électronique, d'au moins une caractéristique d'environnement d'exploitation parmi une pluralité de caractéristiques d'environnement d'exploitation ;
l'analyse, par le biais d'une simulation, d'un impact d'un regroupement de composants de moteur parmi la pluralité de composants de moteur, ayant chacun une caractéristique de fabrication mesurée définissant un moteur en fonction de l'au moins une caractéristique d'environnement d'exploitation ;
la détermination d'attributs de composant en fonction de l'impact de l'au moins une caractéristique d'environnement d'exploitation sur le regroupement de composants de moteur définissant le moteur ; et
la sélection, par l'unité de commande électronique, d'un ou plusieurs composants de moteur parmi le catalogue de la pluralité de composants de moteur pour une nomenclature en fonction de la caractéristique de fabrication mesurée et de l'au moins une caractéristique d'environnement d'exploitation.

11. Procédé implémenté par ordinateur selon la revendication 10, dans lequel la caractéristique de fabrication mesurée appartient à un regroupement prédéfini de composants au sein d'une distribution de variabilité pour un type de composant prédéfini, et le regroupement correspond à au moins l'une des caractéristiques d'environnement d'exploitation de la pluralité de caractéristiques d'environnement d'exploitation.

12. Procédé implémenté par ordinateur selon l'une quelconque des revendications 10 à 11, comprenant en outre :
la détermination, par l'unité de commande électronique, d'un groupe pour un composant au sein de l'un parmi une pluralité prédéfinie de regroupements de composants en fonction de la caractéristique de fabrication mesurée, dans lequel la pluralité prédéfinie de regroupements de composants définissent une distribution de variabilité pour un type de composant spécifique.

13. Procédé implémenté par ordinateur selon la revendication 12, dans lequel la détermination du groupe pour le composant est en fonction en outre d'au moins l'un parmi : un modèle de dommages cumulés, un modèle de flotte ou des données d'inspection du moteur.

14. Procédé implémenté par ordinateur selon l'une quelconque des revendications 10 à 13, dans lequel la pluralité de caractéristiques d'environnement d'exploitation comporte au moins l'un parmi :
une durée de vol,
une température de région de décollage ou d'atterrissage,
une trajectoire d'approche ou d'atterrissage,
une trajectoire de décollage,
un protocole de freinage d'atterrissage,
un profil d'accélération de décollage, ou
une densité ou taille de particules dans l'air.

15. Produit programme d'ordinateur permettant de sélectionner des composants de moteur pour un moteur, le produit programme d'ordinateur comprenant un support de stockage lisible par ordinateur ayant des instructions de programmation incorporées avec celui-ci, les instructions de programmation sont exécutables par un processeur pour amener le processeur à :
recevoir un catalogue d'une pluralité de composants de moteur, dans lequel la pluralité de composants de moteur comporte une caractéristique de fabrication mesurée ;
recevoir au moins une caractéristique d'environnement d'exploitation parmi une pluralité de caractéristiques d'environnement d'exploitation ;
analyser, par le biais d'une simulation, un impact d'un regroupement de composants de moteur définissant un moteur en fonction de l'au moins une caractéristique d'environnement d'exploitation ;
déterminer des attributs de composant en fonction de l'impact de l'au moins une caractéristique d'environnement d'exploitation sur le regroupement de composants de moteur définissant le moteur ; et
sélectionner un ou plusieurs composants de moteur parmi le catalogue de la pluralité de composants de moteur pour une nomenclature en fonction de la caractéristique de fabrication mesurée et de l'au moins une caractéristique d'environnement d'exploitation.
